(19) 

Europäisches
Patentamt
European
Patent Office
Office européen
des brevets

(11) **EP 2 518 731 A2**

(12) **EUROPEAN PATENT APPLICATION**

(43) Date of publication:
**31.10.2012 Bulletin 2012/44**

(51) Int Cl.:
*G21C 9/004* (2006.01)     *G21C 15/18* (2006.01)
*G21C 19/07* (2006.01)     *G21D 3/06* (2006.01)

(21) Application number: **12165594.8**

(22) Date of filing: **26.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.04.2011 JP 2011100002**

(71) Applicant: **Hitachi-GE Nuclear Energy, Ltd.
Hitachi-shi
Ibaraki 317-0073 (JP)**

(72) Inventors:
• **Namba, Koji
Tokyo 100-8220 (JP)**
• **Ohtsuka, Masaya
Tokyo 100-8220 (JP)**
• **Fujimura, Koji
Tokyo 100-8220 (JP)**

(74) Representative: **MERH-IP
Matias Erny Reichl Hoffmann
Paul-Heyse-Strasse 29
80336 München (DE)**

(54) **Nuclear power plant, fuel pool water cooling facility and method thereof**

(57)     A nuclear power plant and a fuel pool water cooling facility and method are provided that can suppress the decrease of a water level in a fuel pool with no power supply at the time of malfunction of a circulating water system.

The nuclear power plant includes a reactor pressure vessel 2 that encompasses a reactor 1 containing nuclear fuel; a containment vessel 3 for housing the reactor pressure vessel 2; a fuel pool 11 for storing spent fuel 12; a reactor building 10 that houses the reactor pressure vessel 2, the containment vessel 3 and the fuel pool 11; a circulating water system 21 adapted to forced-circulating-cool the fuel pool water 14 in the fuel pool 11; and at least one heat pipe 13 for transferring heat of the fuel pool water 14 in the fuel pool 11 and discharging the heat to the atmosphere.

Fig.1

## Description

BACKGROUND OF THE INVENTION

1. Field of the Invention

The present invention relates to a nuclear power plant, a fuel pool water cooling facility and a fuel pool water cooling method.

2. Description of the Related Art

A boiling water reactor stores not only reactor fuel being used in a reactor pressure vessel but also spent fuel having been operated for several cycles. A reactor building for a boiling water reactor is hereinafter abbreviated as BWR. Spent fuel is generally stored in the fuel pool water (cooling water) in a fuel pool (hereinafter abbreviated as SFP) provided in a reactor building (see JP-9-329684-A). In general, this type of BWR has a circulating water system for maintaining fuel pool water at an appropriate temperature. The fuel pool water is forcibly circulated by a pump between a cooling water tank and the like and a fuel pool or by other means in order to remove the residual heat of fuel. For example, the fuel pool water is cooled through heat exchange with sea water in the process of the circulation. In this way, the water temperature in the fuel pool is maintained at approximately 40°C.

SUMMARY OF THE INVENTION

From the standpoint of enhancing the safety of the BWR, it is essential to surely implement three principles (1. stop of fission, 2. cooling of reactor fuel, 3. confinement of radioactive materials) for ensuring the safety of a reactor in case of emergency. For item 2. cooling of reactor fuel, a multiple safety protection system is specially installed to take effective actions against emergencies. The multiple safety protection system includes an emergency core cooling system (ECCS), a residual heat removal system (RHR), an isolation condenser (IC) and a passive containment cooling system (PCCS).

However, if station black out occurs due to unpredictable circumstances and a circulating water system is shut down, a problem with cooling of the fuel pool water will arise. Specifically, if, during the time elapsing until emergency power will be recovered, water temperature increases to atmospheric saturation temperature (approximately 100°C), then the water in the fuel pool will evaporate and the water level of the fuel pool will lower.

The present invention has been made in view of such situations and aims to provide a nuclear power plant and a fuel pool water cooling facility and method that can suppress the decreasing of the water level in a fuel pool with no power supply at the time of malfunction of a circulating water system.

To solve the above problem, the present invention is configured such that a heat pipe transfers the heat of a fuel pool and discharges it to the atmosphere.

According to the present invention, even in the event that the circulating water system adapted dynamically to cool fuel pool water malfunctions, the heat pipe transfers the heat of the fuel pool water and discharges it to the atmosphere. In this way, the boiling and evaporation of the fuel pool water can be suppressed to suppress the decreasing of the water level of the fuel pool.

BRIEF DESCRIPTION OF THE DRAWINGS

Fig. 1 is a system diagram of an essential part of a nuclear power plant according to a first embodiment of the present invention.
Fig. 2 is a schematic configuration diagram of a heat pipe as an example installed in the nuclear power plant according to the first embodiment.
Fig. 3 is a schematic configuration diagram of a heat pipe as another example installed in the nuclear power plant according to the first embodiment.
Fig. 4 is a schematic diagram showing gradients of various temperatures of a spent fuel pool and a heat pipe installed in the nuclear power plant according to the first embodiment.
Fig. 5 is a graph showing time changes of the surface temperature of the fuel pool water in the spent fuel pool of the nuclear power plant according to the first embodiment.
Fig. 6 is a schematic configuration diagram of a heat pipe as an example installed in a nuclear power plant according to a second embodiment of the present invention.
Fig. 7 is a cross-sectional view taken along line A-A in Fig. 6.
Fig. 8 is a schematic diagram showing gradients of various temperatures of a spent fuel pool and the heat pipe installed in the nuclear power plant according to the second embodiment of the present invention.
Fig. 9 is a system diagram of an essential part of a nuclear power plant according to a third embodiment of the present invention.
Fig. 10 is a system diagram of an essential part of a nuclear power plant according to a fourth embodiment of the present invention.
Fig. 11 is a schematic configuration diagram of an essential part of a nuclear power plant according to a fifth embodiment of the present invention.
Fig. 12 is a schematic configuration diagram of an essential part of a nuclear power plant according to a sixth embodiment of the present invention.
Fig. 13 is a schematic configuration diagram of an essential part of a nuclear power plant according to a seventh embodiment of the present invention.

DESCRIPTION OF THE PREFERRED EMBODIMENTS

Preferred embodiments of the present invention will hereinafter be described with reference to the drawings.

(First Embodiment)

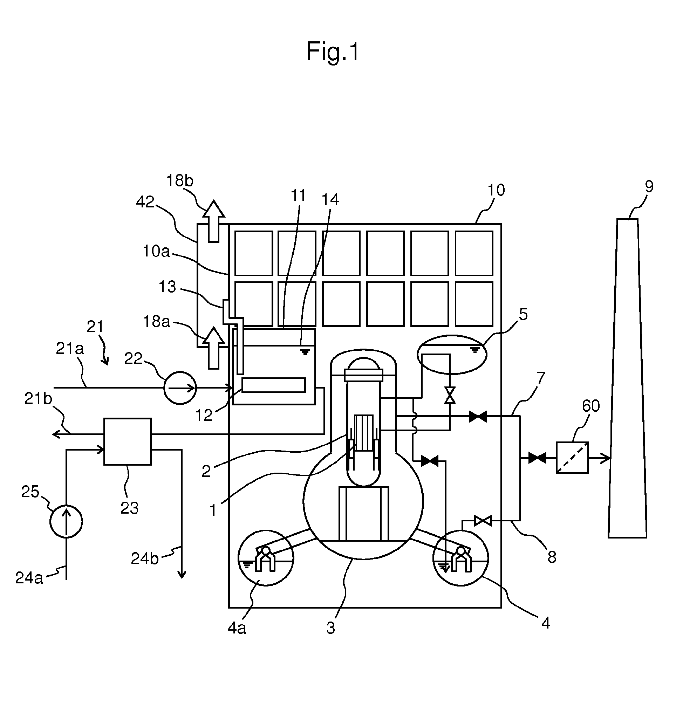

Fig. 1 is a system diagram of an essential part of a nuclear power plant according to a first embodiment of the present invention.

Fig. 1 shows a boiling water reactor (hereinafter, abbreviated as the BWR) having a spent fuel pool (hereinafter, abbreviated as the SFP). The following embodiments describe a case where the present invention is applied to a system of the BWR having the SFP by way of example.

A reactor building 10 in the BWR power plant shown in Fig. 1 houses a containment vessel 3 including a pressure suppression pool 4 fulfilling a function of inner pressure regulation, an isolation condenser 5 used to condense steam in case of emergency, an SFP 11 storing spent fuel 12 and the like. The containment vessel 3 houses a reactor pressure vessel 2 encompassing a reactor 1 containing nuclear fuel. In this BWR, water is boiled in the reactor 1 in the reactor pressure vessel 2 and steam thus generated is supplied to a low pressure turbine and a high pressure turbine to drive a generator for generating electricity. The steam having driven the turbines is condensed in a condenser, then is increased in pressure and heated through a feed water heater, a feed water pump and the like, and is returned to the reactor pressure vessel. However, Fig. 1 omits the illustrations of the turbines such as the high pressure turbine and the low pressure turbine, the generator, the condenser, the feed water heater, the feed water pump and the like.

The pressure suppression pool 4 of a donut type is connected to the lower portion of the containment vessel 3. A conduit pipe is connected to the upper portion of the reactor pressure vessel 2 and extends into liquid 4a in the pressure suppression pool 4. For example, if the pressure in the reactor pressure vessel 2 is raised, steam can be discharged into the liquid 4a in the pressure suppression pool 4 for condensation by opening a main steam relief safety valve attached to the conduit pipe. If the pressure in the containment vessel 3 is further raised, the steam in the containment vessel 3 is discharged through a vent pipe 7 of containment vessel (drywell) or a vent pipe 8 of containment vessel (wetwell). The steam thus discharged is passed through a radioactive material adsorption filter 60 and radioactive materials are recovered. Then, the steam is discharged from an exhaust tower 9 to the outside of the plant, i.e., to the atmosphere. The above-mentioned isolation condenser 5 is installed at a height approximately equal to the upper portion of the containment vessel 3 in the reactor building 10.

The above-mentioned SFP 11 is installed at a height approximately equal to the upper portion of the containment vessel 3 in the reactor building 10. The spent fuel 12 is installed in a lower portion of the SFP 11. Fuel pool water 14 is stored in the SFP 11 at a level twice or more the height (e.g. approximately 4 m) of the bundle of the spent fuel 12. The BWR power plant is provided with a circulating water system 21 for dynamically cooling the fuel pool water 14 of the SFP 11. The SFP 11 is connected to a water source (not shown) such as a tank and the like installed through a feed water root 21a and drainage 21b. The fuel pool water 14 is forcibly circulated by driving a pump 22 between the SFP 11 and the water source through the feed water root 21a and the drainage 21b. In other words, the fuel pool water 14 having taken the residual heat of the spent fuel 12 in the SFP 11 is discharged from the SFP 11 through the drainage 21b. In addition, the fuel pool water 14 from the water source via the feed water root 21a flows into the SFP 11. In this way, the fuel pool water 14 in the SFP 11 is maintained at a predetermined temperature (e.g. approximately 40°C). The fuel pool water 14 circulated between the SFP 11 and the water source is subjected to heat exchange with seawater 24a pumped up from the sea by a pump 25 by use of a cooling water heat exchanger 23 installed in the middle of the circulating system (the drainage 21b in the present embodiment). Thus, the heat of the fuel pool water 14 is transferred to seawater. The seawater 24b having taken heat in the cooling water heat exchanger 23 is discharged to the sea. In short, seawater serves as a final heat sink for the residual heat of the spent fuel 12.

Incidentally, the SFP 11 not only stores the spent fuel 12 but also temporarily stores the fuel in use taken out of the reactor pressure vessel 2 for a periodic inspection in some cases.

At least one heat pipe 13 is installed in the SFP 11 so as to have one side (on the lower side in the present embodiment) submerged in the fuel pool water 14 stored therein. The heat pipe 13 is designed as below. The evaporation and condensation of working fluid occurs in the inner space of the heat pipe 13. Latent heat resulting from such evaporation and condensation are used to transfer the residual heat transferred to the fuel pool water 14 from the spent fuel 12, to the outside of the SFP 11 through the heat pipe 13. The heat pipe 13 has the other side (the upper side in the present embodiment) exposed to the inside of the passage of an air duct 42 installed on the reactor building 10. The installation location of the heat pipe 13 with respect to the reactor building 10 is not always restrictive. However, the present embodiment exemplifies the case where the heat pipe 13 is installed on a lateral external wall portion 10a of the reactor building 10. The air duct 42 is such that one of openings is located at a position higher than the other. The present embodiment exemplifies the vertically extending straight pipe. In this case, in the air duct 42, air heated with heat inputted from the heat pipe 13 moves upward. Therefore, because of natural circulation, air 18a outside the reactor building 10 enters at the inlet (the lower opening) of the air duct 42 and heated air 18b flows out of the outlet (the upper opening) of the air duct 42. In this way, residual heat is finally discharged to the atmosphere.

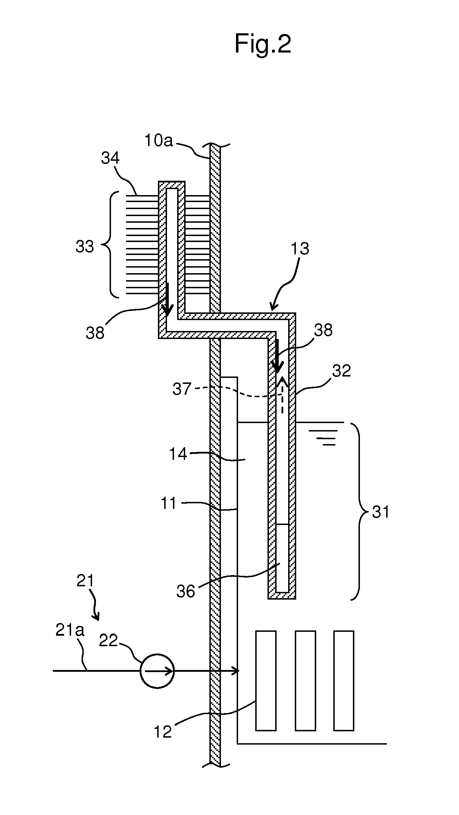

Fig. 2 is a schematic configuration diagram of the heat pipe 13 as an example.

The heat pipe 13 shown in Fig. 2 is a gravity driven type heat pipe having no wick (capillary structure) on the inner wall portion of a conduit. The heat pipe 13 is provided on an upper side with a cooling part 33 where working fluid is condensed. Although the form of the cooling part 33 is not restrictive, cooling means 34 is installed on the outer circumferential portion of the heat pipe 13 in the present embodiment. A plurality of cooling fins are exemplified as the cooling means 34. The heat pipe 13 is of a closed pipe structure in which both upper and lower ends are closed. The heat pipe 13 has liquid 36 serving as working fluid in a lower end portion. A portion of the heat pipe 13 submerged in the fuel pool water 11 in the spent fuel pool 14 corresponds to a heating part 31. The liquid 36 exists in the heating part 31.

In the heat pipe 13 in Fig. 2, the liquid 36 in the heating part 31 is heated with the fuel pool water 14 to produce a steam flow 37. The steam flow 37 moves upward in the central portion of the conduit of the heat pipe 13. The heat of the steam flow 37 is released from the cooling part 33 within the air duct 42. In addition, the heat thus released is discharged from the air duct 42 along with the rising air 18b. Condensate liquid 38 condensed due to heat exchange with the air 18b flows down along the inner wall surface of the heat pipe 13 and returns to the liquid 36. Fig. 2 illustrates the case where the single heat pipe 13 is installed by way of example. However, the number of the heat pipes 13 can suitably be increased according to a required amount of removed heat.

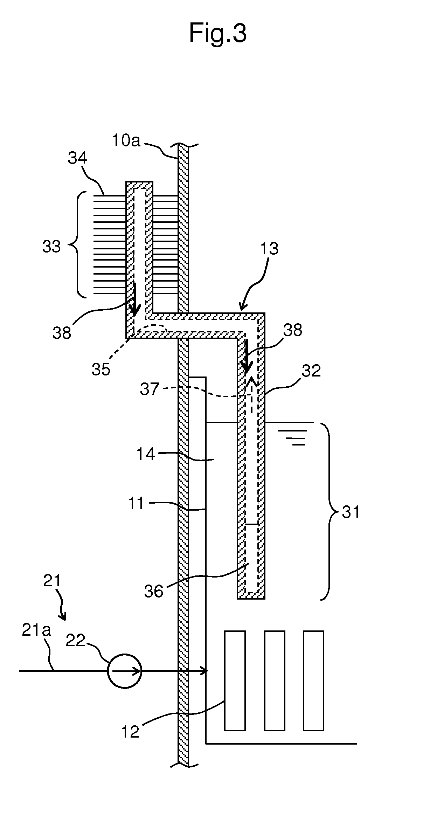

Fig. 3 is a schematic configuration diagram of a heat pipe 13 as another example.

The heat pipe 13 shown in Fig. 3 is a surface tension type heat pipe having a wick (capillary structure) 35 on an inner wall portion. The heat pipe 13 shown in Fig. 3 has the same configuration as that of the heat pipe 13 in Fig. 2 except for having the wick 35.

Also in the heat pipe 13 in Fig. 3, a steam flow 37 generated in the heating part 31 moves upward along the conduit central portion of the heat pipe 13 and the heat of the steam flow 37 is released in the cooling part 33 so that the steam flow 37 is condensed. Condensate liquid 38 flows down along the wick 35 on the inner wall surface of the heat pipe 13. The heat pipe 13 in Fig. 3 provides the condensate liquid 38 that flows down more easily than that provided by the heat pipe 13 having no wick in Fig. 2, so that the heat pipe 13 in Fig. 3 has higher heat transfer performance. Also in the present embodiment, the number of the heat pipes 13 can arbitrarily be increased according to a required amount of removed heat.

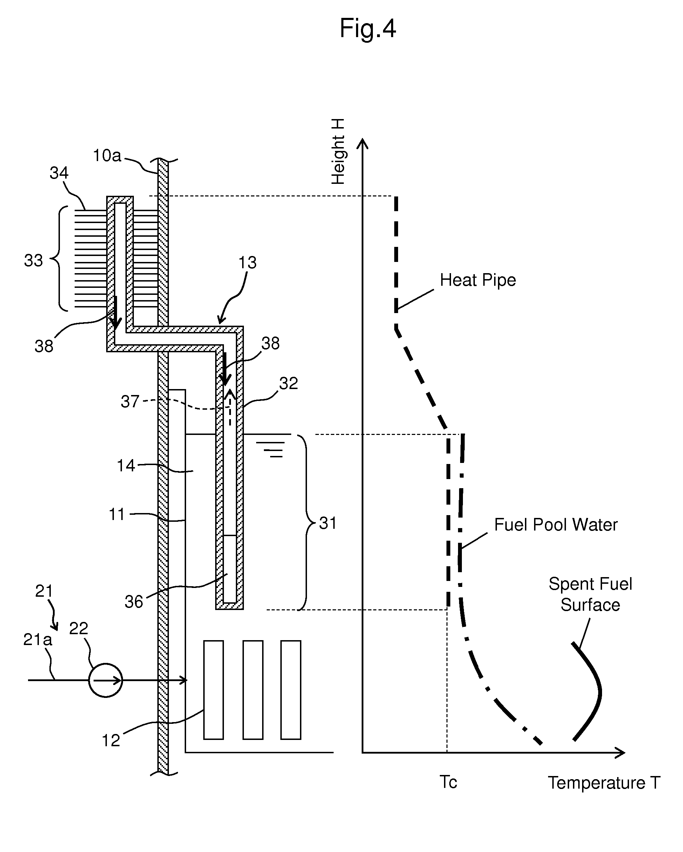

Fig. 4 is a schematic diagram showing gradients of various temperatures of the SFP 11 and of the heat pipe 13.

Fig. 4 shows a graph representing, on the right, the respective gradients of the surface temperature of the spent fuel 12, of the water temperature of the fuel pool water 14 and of the temperature of the heat pipe 13. This graph is allowed to correspond to the schematic configuration diagram extracting the SFP 11 and the heat pipe 13 on the left in Fig. 4.

The forced circulation of the fuel pool water 14 by the pump 22 may be shut down due to station black out. In such an event, if the water temperature in the SFP 11 rises up to approximately 60°C, it is necessary to rapidly improve the residual heat removal performance of the heat pipe 13 so as to prevent the boiling of the fuel pool water 14 in the SFP 11. To meet the necessity, water is selected as working fluid in the heat pipe 13 and saturated pressure P in the heat pipe 13 is made to satisfy the following condition:

$$P \leq 20 \text{ kPa} \quad \dots \quad (\text{Expression 1})$$

If the saturated pressure P in the heat pipe 13 is 20 kPa, the working fluid boils at approximately 60°C. The reason for using water as working fluid is that water has large latent heat and the same components as those of the fuel pool water 14. Thus, there is an advantage that problem with fluid-mixing doesn't arise, even if the heat pipe 13 should be damaged.

The spent fuel 12 releases residual heat of about several percentage of the thermal power in operation. The fuel pool water 14 in the SFP 11 is heated with the residual heat. The heat pipe 13 is heated with the fuel pool water 14 in the heating part 31 to raise the water temperature of the liquid 36 to approximately 60°C. At this time, the steam flow 37 is generated from the liquid 36, heat transfer is started. In the reactor building 10, the steam flow 37 has no heat loss in an adiabatic part 32 of the heat pipe 13 that is exposed from the surface of the fuel pool water 14 while keeping rising in the heat pipe 13. When rising up to the cooling part 33 being exposed to the outside of the reactor building 10, the steam flow 37 is subjected to heat exchange with the air 18b to be cooled to e.g. approximately 25°C. If the so-called cooling-reinforcing temperature Tc is 60°C, the liquid 36 functions as a thermal diode in which the heat transfer performance of the heat pipe 13 is exhibited, only after the liquid 36 reaches the cooling-reinforcing temperature Tc. Incidentally, there is no problem in setting, at an appropriate value lower than 60°C, the above-mentioned cooling-reinforcing temperature Tc at which the heat pipe 13 produces a cooling switching effect.

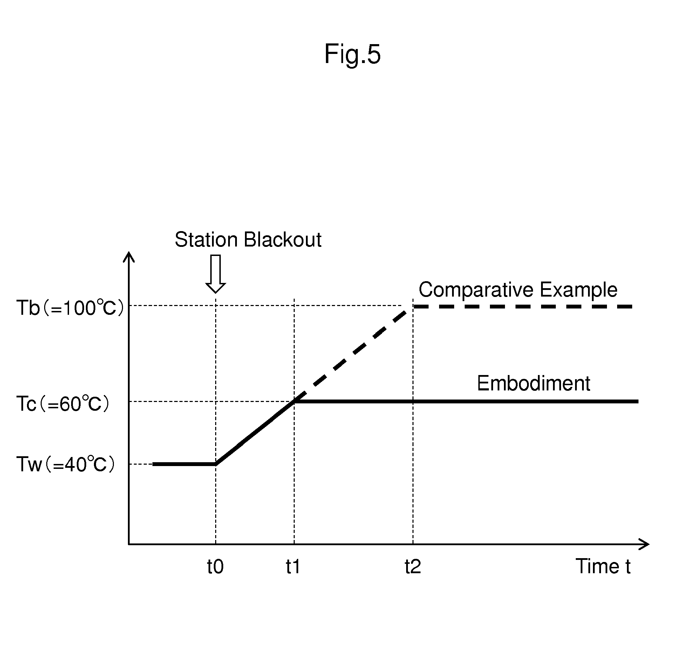

Fig. 5 is a graph showing time changes in the surface temperature of the fuel pool water 14 in the SFP 11.

In Fig. 5, it is assumed that station black out occurs at time t = t0. At this point of time, the surface temperature of the fuel pool water 14 is still Tw (e.g. approximately 40°C). If a forced cooling pump 22 is stopped at time t = t0, a comparative example (a broken line) omitting the heat pipe 13 is such that the residual heat of the spent fuel 12 is transferred to the fuel pool water 14 in the SFP 11. At time t = t2, the temperature of the fuel pool water 14 reaches a saturated temperature Tb (a boiling point: 100°C) of water. In the SFP 11, the fuel pool water 14 comes to the boil and evaporates.

On the other hand, in the present embodiment (a solid line), even if the forced circulation cooling function of the pump 22 lowers, the temperature of the fuel pool water 14 rises to the cooling-reinforcing temperature Tc (= approximately 60°C) at which the evaporation and condensation phenomenon of the working fluid (water) occurs in the heat pipe 13 at time t=t1 (<t2). Then, the cooling function of the heat pipe 13 starts to act quickly and thereafter the surface temperature of the fuel pool water 14 is maintained at approximately Tc. At this time, the fuel pool water 14 in the SFP 11 causes natural convection. Therefore, the evaporation of the fuel pool water 14 in the SFP 11 is suppressed to maintain the fuel pool water 14 at the level of the initial time (time t = t0). Thus, the sufficient water level of the SFP 11 is ensured and also the temperature of the fuel pool water 14 can be maintained at approximately Tc (= approximately 60°C).

In the nuclear power plant of the present embodiment as described above, the residual heat of the spent fuel is cooled by the heat exchange of the fuel pool water 14 of the SFP 11 with the cooling water forcibly circulated through the circulating water system 21. In addition, the residual heat of the spent fuel is cooled by the heat transfer by means of the heat pipe 13 installed in the SFP 11. The heat transfer by the heat pipe 13 needs no power. Phase-change phenomena of working fluid such as boiling and condensation are employed. Therefore, the heat transfer performance of the working fluid having large latent heat is remarkably higher than that of another cooling means in which working fluid is naturally circulated as a liquid single-phase flow. Even if the pump 22 has a malfunction due to station black out, the heat pipe 13 can statically release the heat of the fuel pool water 14 through natural circulation. The fuel pool water 14 is prevented from being evaporated so that the water level of the SFP 11 does not lower and the spent fuel 12 is not exposed from the water surface. Thus, the heat removal of the spent fuel 12 can be continued to thereby achieve the safety and reliability of the spent fuel 12 stored in the fuel pool water 14.

(Second Embodiment)

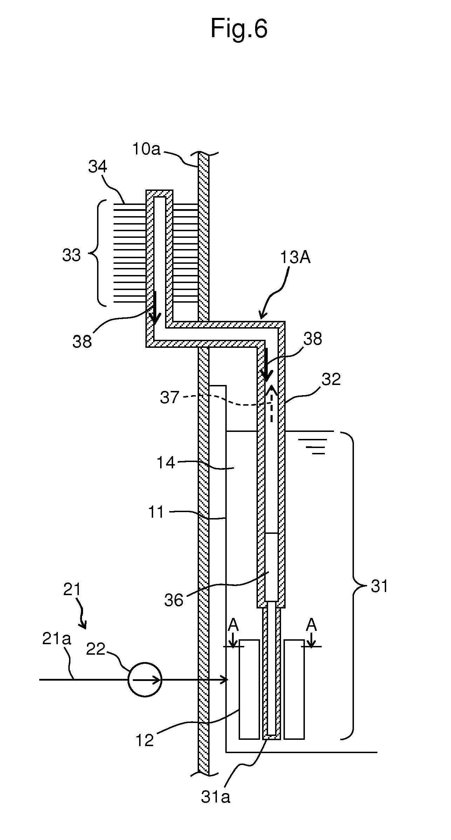

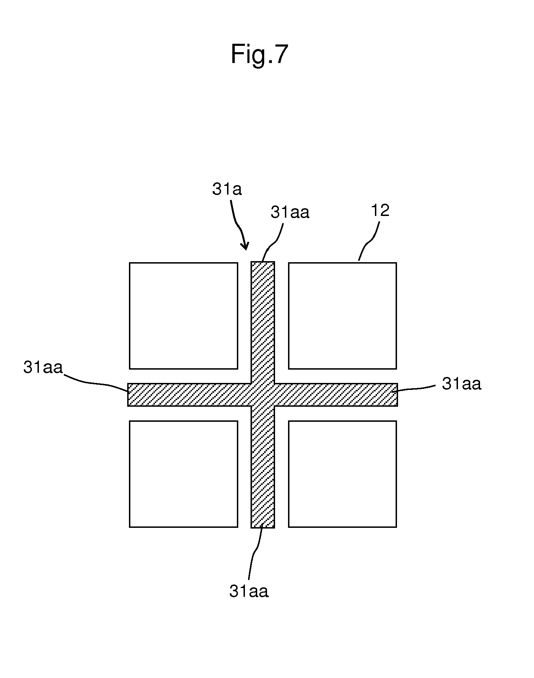

Fig. 6 is a schematic configuration diagram of a heat pipe as an example installed in the nuclear power plant according to a second embodiment of the present invention. Fig. 7 is a cross-sectional view taken along line A-A in Fig. 6.

The second embodiment is different from the first embodiment in the following point. The heating part 31 of the heat pipe 13 in the first embodiment does not reach the spent fuel rod 12 in the fuel pool water 14. On the other hand, a heat pipe 13A in the present embodiment is inserted between a plurality of spent fuel rods 12 in the fuel pool water 14.

More specifically, as shown in Figs. 6 and 7, the heating part 31 of the heat pipe 13A is divided into two portions in a height direction. A lower end side thereof is an insert part 31a that is inserted among the spent fuel rods 12. The insert part 31a has a length capable of covering the length of the spent fuel rod 12, that is for example, 4 m or more. The insert part 31a is configured to have four heat-absorbing plates 31aa extending vertically and radially from an axially central portion. The sectional shape of the insert part 31a is such a cross-shape that the heat-absorbing plates 31aa extend radially from a central portion. As shown in Fig. 7, the insert part 31a is inserted into the central portion of the four spent fuel rods 12, so that each heat-absorbing plate 31aa is interposed between two spent fuel rods 12 adjacent thereto.

In the present embodiment, the insert part 31a is inserted between the spent fuel rods 12 installed in the SFP 11 in such a manner that the heat-absorbing plates 31aa cover the overall height-range of the spent fuel rods 12.

The other configurations are the same as those of the first embodiment. The same portions are denoted by like reference numerals in the above-mentioned figures and their explanations are omitted.

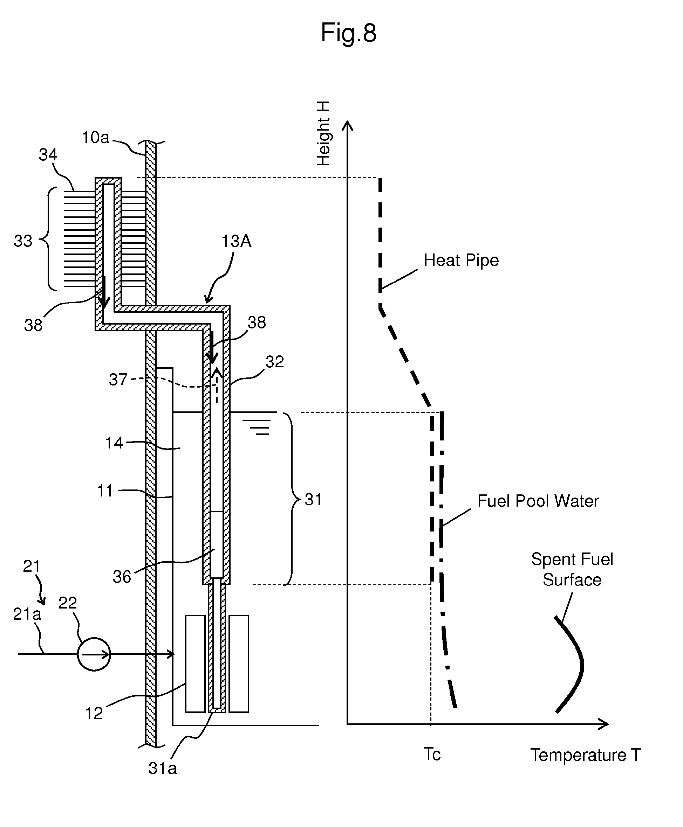

Fig. 8 is a schematic diagram showing gradients of various temperatures of the SFP 11 and the heat pipe 13a and corresponds to Fig. 4.

The tendency of temperature gradients is the same as that of the first embodiment. However, as seen from the comparison with Fig. 4, the temperature of the fuel pool water 14 is suppressed in the arrangement area of the spent fuel rods 12. This is because of the following. The heat pipe 13A is inserted between the spent fuel rods 12. The fuel pool water 14 is stably cooled without the sub-cooled boiling of the fuel pool water 14 on the fuel surface. The configuration of the present embodiment can improve heat removal efficiency compared with that of the first embodiment. This is because the heat-absorbing plates 31aa come closer to the spent fuel rods 12 releasing residual heat and additionally the cross-shaped insert part 31a has a larger specific surface area than that of the cylindrical insert part 31a.

(Third Embodiment)

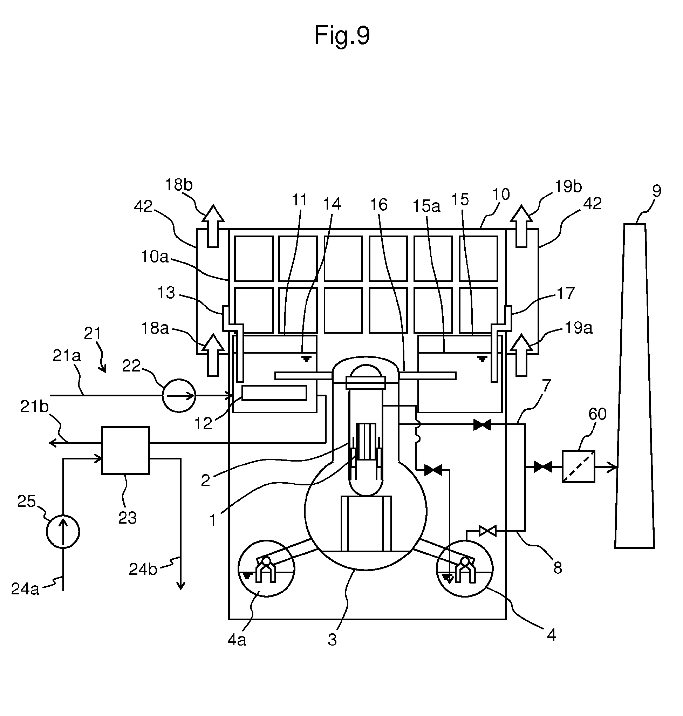

Fig. 9 is a system diagram of an essential part of a nuclear power plant according to a third embodiment of the present invention.

The third embodiment is different from the first embodiment in the following point. A pool 15 for storage of reactor core internal structure is installed in a reactor building 10. The pool 15 is used to store a reactor core internal structure in pool water 15a. In addition, a heat pipe 17 for the pool for storage of reactor core internal structure is additionally mounted to the pool 15. The pool 15 is connected to the SFP 11 by way of a connecting heat pipe 16.

The pool 15 is installed at a height equal to the upper portion of the containment vessel 3 in the reactor building 10. The basic configurations of the heat pipe 17 for storage of reactor core internal structure and of the connecting heat pipe 16 are the same as that of the heat pipe 13 for the fuel pool.

The other configurations are the same as those of the first embodiment. The same portions are denoted by like reference numerals in the above-mentioned figures and their explanations are omitted.

In the present embodiment, the residual heat of the spent fuel 12 is released by the heat removal through the circulating water system 21 and the heat removal through the heat pipe 13 for the SFP 11. In addition, the residual heat of the spent fuel 12 is released by heat removal through a heat transfer route from the connecting heat pipe 16 via the pool 15 for storage of reactor core internal structure to the heat pipe 17. Thus, the present embodiment can improve a passive cooling capacity even compared with the first embodiment.

(Fourth Embodiment)

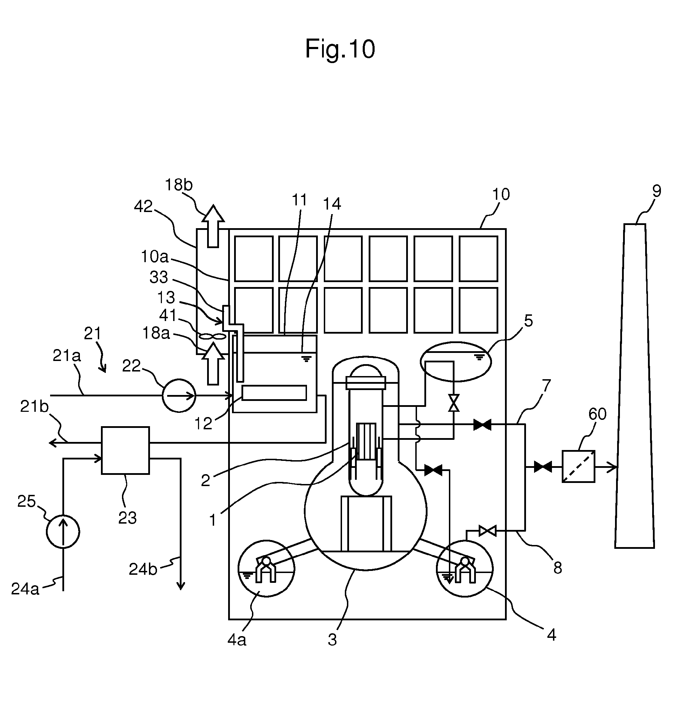

Fig. 10 is a system diagram of an essential part of a nuclear power plant according to a fourth embodiment of the present invention.

The fourth embodiment is different from the first embodiment in the provision of a blast fan 41 adapted to deliver air to the cooling part of the heat pipe 13. In other words, this is an example in which the cooling part 33 of the heat pipe 13 is changed from a natural cooling method to a forced air cooling method using the blast fan 41. In the present embodiment, the blast fan 41 is installed inside the air duct 42 so as to locate on the upstream side (on the lower side) of the air flow direction in the air duct 42 with respect to the cooling part 33 of the heat pipe 13. However, the blast fan 41 may locate on the downstream side. The blast direction is an upward direction.

The other configurations are the same as those of the first embodiment. The same portions are denoted by like reference numerals in the above-mentioned figures and their explanations are omitted.

The cooling part 33 of the heat pipe 13 is provided with a large number of the cooling fins (the cooling means 34, see Figs. 2, 3 and others) in order to increase a cooling area. However, if the cooling fins can forcibly be cooled by the blast fan 41, a heated area of the cooling part 33 can be reduced, so that the cooling fins can be downsized. Consequently, the heat pipe 13 can be formed compactly. Needless to say, the present embodiment additionally provides the forced cooling mechanism for the cooling fins. However, the present embodiment includes the configurations of the first embodiment; therefore, the heat pipe 13 can function alone without the drive of the blast fan 41.

Also in the present embodiment, the residual heat of the spent fuel 12 can be released by the heat removal of two types: the heat removal through the circulating water system 21 and the heat removal through the heat pipe 13. If the blast fan 41 is driven, the cooling efficiency of the heat pipe 13 is improved, thereby producing a higher cooling effect.

(Fifth Embodiment)

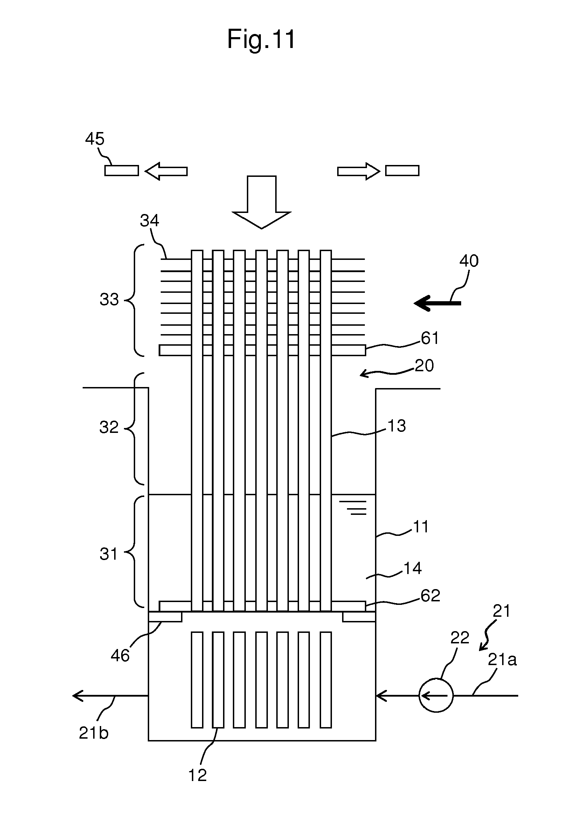

Fig. 11 is a schematic configuration diagram of an essential part of a nuclear power plant according to a fifth embodiment of the present invention.

The fifth embodiment is different from the first embodiment in that the heat pipe 13 is not normally submerged in the fuel pool water 14 but is submerged as needed.

In the present embodiment, the heat pipe 13 is provided with retaining portions 61 and 62 on the lower side of the cooling part 33 and at a lower end of the heat pipe 13, respectively. A plurality of heat pipes 13 are bundled and unitized by the retaining portions 61, 62 and the cooling means 34. However, the plurality of heat pipes 13 are not always required. The present embodiment has a stopper 45 which supports the heat pipes 13 at a position above the water surface of the SFP 11 and which can input the heat pipes 13 in the fuel pool water 14 of the SFP 11 by releasing the support of the heat pipes 13. The stopper 45 is installed in the upper portion of the reactor building 10 so as to support the upper side retaining portion 61 during normal times. In this state, the heat pipes 13 are wholly located above the surface of the fuel pool water 14, i.e., are not submerged in the fuel pool water 14.

However, when the stopper 45 is removed to release the support of the retaining portion 61 by the stopper 45, the heat pipes 13 are driven to a position at which the lower side retaining portion 62 is supported by the stopper 46 installed on the inner wall of the SFP 11 (the state in Fig. 11). In this state, the heating part 31 of the heat pipe 13 is submerged in the fuel pool water 14. Incidentally, the stopper 46 is installed in the fuel pool water 14 at a position higher than the spent fuel 12. Even if the heat pipes 13 are driven as shown in Fig. 11, they do not come into contact with the spent fuel 12.

Although particularly not shown, the heat pipe 13 may be configured to pass through a ceiling part of the reactor building 10 in a lower portion below the stopper 45. In such a case, the cooling part 33 may be configured to be exposed to the outside of the reactor building 10 even in the state in Fig. 11 where the heat pipes 13 have been driven.

The other configurations are the same as those of the first embodiment. The same portions are denoted by like reference numerals in the above-mentioned figures and their explanations are omitted.

In the present embodiment, in case of a loss of power for the circulating water system 21, the stopper 45 is removed to allow the heat pipes 13 to be gravity-driven. This makes it possible for the heat pipes 13 to cool the fuel pool water 14. Thus, the present embodiment can produce the same effect as that of the first embodiment.

(Sixth Embodiment)

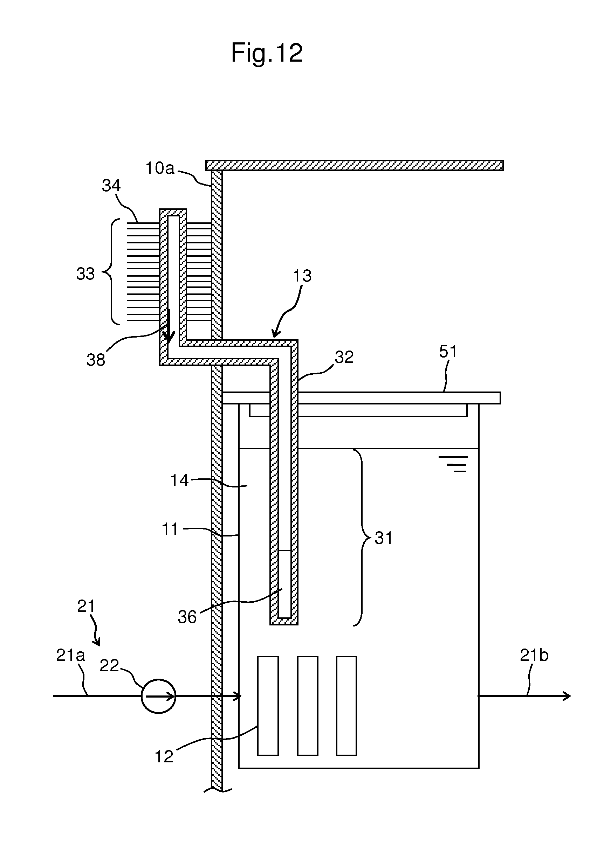

Fig. 12 is a schematic configuration diagram of an essential part of a nuclear power plant according to a sixth embodiment of the present invention.

The sixth embodiment is different from the first embodiment in that the fuel pool water 14 in the SFP 11 is sealed. More specifically, an upper plate 51 is installed on the SFP 11 to seal the fuel pool water 14 in the SFP 11. Thus, generated steam containing radioactive materials resulting from residual heat removal is confined in the SFP 11. The heat pipe 13 passes through the upper plate 51.

The other configurations are the same as those of the first embodiment. The same portions are denoted by like reference numerals in the above-mentioned figures and their explanations are omitted.

Measures are taken to prevent the boiling of the fuel pool water 14 by means of the heat pipe 13. However, in the event that the fuel pool water 14 is boiled and evaporated by the residual heat of the spent fuel 12, if the SFP 11 is opened, steam flows out of the SFP 11 so that the water level of the SFP 11 probably lowers. On the other hand, the upper plate 51 is installed on the SFP 11; therefore, the steam of the fuel pool water 14 is prevented from escaping to the outside of the SFP 11 so that the water level of the SFP 11 may not lower.

(Seventh Embodiment)

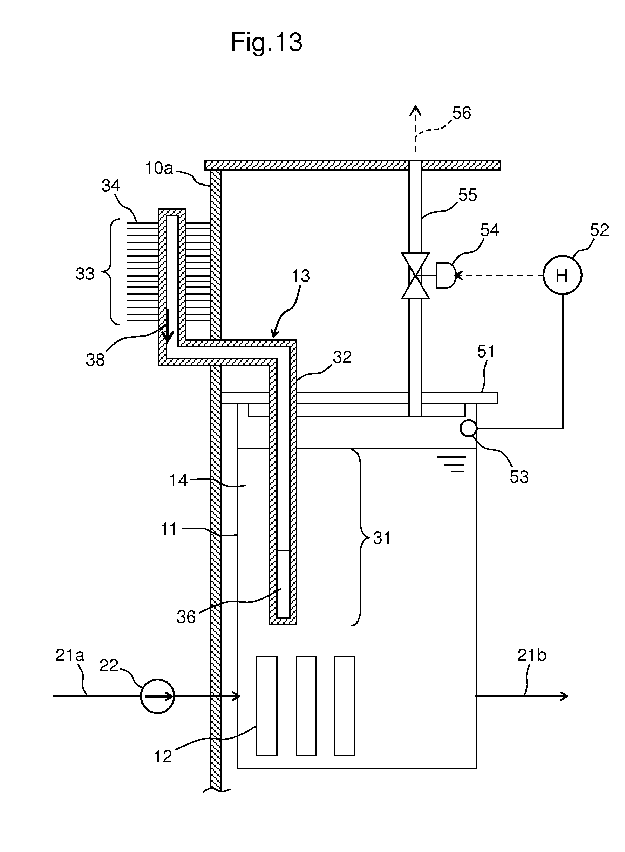

Fig. 13 is a schematic configuration diagram of an essential part of a nuclear power plant according to a seventh embodiment of the present invention.

The seventh embodiment is different from the sixth embodiment in the following point. Hydrogen concentration in a gaseous phase in the SFP 11 is detected. Hydrogen gas is released to the atmosphere in the range where the hydrogen concentration thus detected does not exceed a flammability limit of hydrogen concentration.

A nuclear power plant of the present embodiment includes a hydrogen concentration detector 52, a hydrogen emission conduit 55 and a control valve 54. The hydrogen concentration detector 52 detects the hydrogen concentration in gaseous phase space in the SFP 11. The hydrogen emission conduit 55 connects the gaseous space in the SFP 11 with the external space of the reactor building 10. The control valve 54 opens and closes the passage of the hydrogen emission conduit 55. The SFP 11 is provided with a mouth detection 53 connecting with the gaseous phase space of the SFP 11. This mouth detection 53 is connected to the hydrogen concentration detector 52. Although particularly not shown, it may be determined that the discharge of hydrogen 56 is necessary on the basis of the hydrogen concentration detected by the hydrogen concentration detector 52. In such a case, only if the hydrogen concentration is at a level equal to or above the flammability limit of hydrogen concentration for reaction with oxygen in air, a control signal is sent to the control valve 54. Then, the control valve 54 opens the hydrogen emission conduit 55, thereby discharging hydrogen 56 via the hydrogen emission conduit 55. Although particularly not shown, it is conceivable that a control facility is installed which controllably opens and closes the control valve 54 on the basis of a detection signal of the hydrogen concentration detector 52.

The other configurations are the same as those of the sixth embodiment. The same portions are denoted by like reference numerals in the above-mentioned figures and their explanations are omitted.

The present embodiment can produce the same effect as that of the sixth embodiment and can suppress the generation of hydrogen combustion in the SFP 11.

(Other Embodiments)

The description has been given thus far taking, as an example, the case where the present invention is applied to the BWR. However, the present invention can be applied not only to the BWR but to plants that have a fuel pool. The present invention may be applied to another type of a nuclear power plant such as a pressurized water reactor or a fast breeder reactor. Also such a case can produce the same effect as the case where the present invention is applied to the BWR.

The embodiments can arbitrarily be combined with each other and can be modified in design in a range not departing from the technical concept of the present invention.

**Claims**

1. A nuclear power plant comprising:

a reactor pressure vessel (2) that encompasses a reactor (1) containing nuclear fuel;
a containment vessel (3) for housing the reactor pressure vessel (2);
a fuel pool (11) for storing spent fuel;
a reactor building (10) that houses the reactor pressure vessel (2), the containment vessel (3) and the fuel pool (11);
a circulating water system (21) adapted to forced-circulating-cool the fuel pool water (14) in the fuel pool (11); and
at least one heat pipe (13) for transferring heat of the fuel pool water (14) in the fuel pool (11) and discharging the heat to the atmosphere.

2. The nuclear power plant according to claim 1, wherein the heat pipe (13) has one end submerged in the fuel pool water (14) in the fuel pool (11) and the other end exposed to the outside of the reactor building (10).

3. The nuclear power plant according to claim 1 or 2, further comprising
an air duct (42) having a passage that the other end of the heat pipe (13) faces.

4. The nuclear power plant according to any one of claims 1 to 3, further comprising
a fan for delivering air to a cooling part of the heat pipe (13).

5. The nuclear power plant according to any one of claims 1 to 4, further comprising:

    a pool (15) for storage of reactor core internal structure that is installed in the reactor building (10);
    a heat pipe (17) for the pool for storage of reactor core internal structure, for transferring heat of pool water in the pool (15) for storage of reactor core internal structure and discharging the heat to the atmosphere;
    a connecting heat pipe (16) connecting the pool (15) for storage of reactor core internal structure with the fuel pool (11).

6. The nuclear power plant according to any one of claims 1 to 5,
wherein the heat pipe has an insert part (31a) to be inserted between a plurality of spent fuel rods (12) in the fuel pool water (14) in the fuel pool (11).

7. The nuclear power plant according to claim 6,
wherein a sectional shape of the insert part (31a) is such a cross-shape that four heat-absorbing plates (31aa) extend radially from a central portion and each of the heat-absorbing plates (31aa) is inserted between two spent fuel rods (12) adjacent to each other.

8. The nuclear power plant according to any one of claims 1 to 7,
wherein a working medium of the heat pipe is the same water as the fuel pool water (14) and the inside of the heat pipe is set at a saturated pressure of 20 kPa or below.

9. The nuclear power plant according to any one of claims 1 to 8,
wherein a wick (35) is provided on an inner wall surface of the heat pipe (13).

10. The nuclear power plant according to any one of claims 1 to 9, further comprising
a stopper (45) which supports the heat pipe (13) at a position above a water surface of the fuel pool (11) and which can release the support to input the heat pipe (13) into the fuel pool water (14) in the fuel pool (11).

11. The nuclear power plant according to any one of claims 1 to 10,
wherein the fuel pool water (14) in the fuel pool (11) is sealed.

12. The nuclear power plant according to claim 11, further comprising:

    a hydrogen concentration detector (52) for detecting hydrogen concentration in gaseous phase space in the fuel pool (11);
    a hydrogen emission conduit (55) for connecting the fuel pool (11) with space outside the reactor building (10); and
    a control valve (54) for opening and closing a flow passage of the hydrogen emission conduit (55).

13. The nuclear power plant according to any one of claims 1 to 12,
wherein the nuclear power plant is a pressurized water reactor, a boiling water reactor or a fast breeder reactor.

14. A fuel pool water cooling facility provided in a nuclear power plant, the nuclear power plant including:

    a reactor pressure vessel (2) that encompasses a reactor (1) containing nuclear fuel;
    a containment vessel (3) for housing the reactor pressure vessel (2);
    a fuel pool (11) for storing spent fuel;
    a reactor building (10) that houses the reactor pressure vessel (2), the containment vessel (3) and the fuel pool (11); and
    a circulating water system (21) adapted to forced-circulating-cool the fuel pool water (14) in the fuel pool (11),
    wherein the fuel pool water (14) cooling facility comprises at least one heat pipe (13) for transferring heat of the fuel pool water (14) in the fuel pool (11) and discharging the heat to the atmosphere.

15. A method of cooling fuel pool for storing spent fuel, comprising a step of
using at least one heat pipe (13) to transfer heat of fuel pool water (14) in the fuel pool (11) and discharge the heat to the atmosphere.

Fig.1

# Fig.2

# Fig.3

# Fig.4

Fig.5

# Fig.6

# Fig.7

# Fig.8

Fig.9

EP 2 518 731 A2

Fig.10

19

EP 2 518 731 A2

# Fig.11

20

# Fig.12

# Fig.13

**EP 2 518 731 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 9329684 A